# EUROPEAN PATENT APPLICATION

(11) **EP 4 628 265 A1**
(43) Date of publication of application: **08.10.2025**
(21) Application number: 25164431.6
(22) Date of filing: 18.03.2025
(51) Int. Cl.: B25J 9/16, B25J 15/06, B25J 15/00, B32B 38/18, B32B 43/00, B65G 47/91

(54) **DETACHING APPARATUS, CONTROL METHOD FOR DETACHING APPARATUS AND PROGRAM**

(30) Priority: 27.03.2024 JP 2024052092
(71) Applicant: TAIKISHA LTD., Tokyo 160-6129 (JP)
(72) Inventor: HIGASHI, Yoshio, Tokyo, 1606129 (JP); SUZUKI, Hiroyuki, Tokyo, 1606129 (JP); TAKIZAWA, Yukiya, Tokyo, 1606129 (JP); WATANABE, Seidai, Tokyo, 1606129 (JP)
(74) Representative: Mathys & Squire

(57) **Abstract**

A detaching apparatus (1) that detaches a target object (70), the detaching apparatus comprising: a plurality of adsorption portions (201A-201I) configured to adsorb the target object; selection means (1206) for selecting a plurality of adsorption portions that are to execute an adsorption operation on the target object, from among the plurality of adsorption portions; adsorption control means (1202) for causing the plurality of adsorption portions selected by the selection means to execute the adsorption operation; and rotation control means (1203) for executing a rotation operation of the adsorption portions which the adsorption operation was executed.

## Description

### BACKGROUND OF THE INVENTION

### Field of the Invention

The present invention relates to a detaching apparatus, a control method for the detaching apparatus, and a program.

### Description of the Related Art

Japanese Patent Laid-Open No. 2010-37076 discloses a plurality of adsorption pads 11 attached to a frame 12 such that the adsorption surfaces face downward. The suction force of each adsorption pad 11 is individually guided using an adsorption air circuit so as to be able to adsorb and grip a target object by suction force.

However, when the technology described in Japanese Patent Laid-Open No. 2010-37076 is used to detach a scrap material (e.g., an unnecessary film), adsorption is performed by all of a plurality of adsorption pads arranged in a grid pattern, which leads to the problem that detachment may fail depending on the shape of the film at the position where detachment is to be performed.

### SUMMARY OF THE INVENTION

The present invention has been made to solve the aforementioned problems, and provides an adaptive detaching apparatus that can detach a target object regardless of the shape of the target object.

The present invention in its first aspect provides a detaching apparatus as specified in claims 1 to 12.

The present invention in its second aspect provides a control method for a detaching apparatus as specified in claim 13.

The present invention in its third aspect provides a program as specified in claim 14.

### BRIEF DESCRIPTION OF THE DRAWINGS

FIG. 1 is a diagram showing an example of the configuration of a detaching apparatus according to an embodiment.
FIG. 2 is a side view of an adsorption device according to the embodiment.
FIG. 3 is a diagram showing change in an adsorption position in the adsorption device according to the embodiment.
FIG. 4 is a plan view of the adsorption device according to the embodiment.
FIG. 5 is an illustrative diagram of vacuum adsorption performed by the adsorption device according to the embodiment.
FIG. 6 is an illustrative diagram of an adsorption operation performed using selected adsorption portions according to the embodiment.
FIG. 7 is an illustrative diagram of a rotation operation according to the embodiment.
FIG. 8 is a diagram showing an example of selection of adsorption portions according to the embodiment.
FIG. 9 is a diagram showing an example of selection of adsorption portions according to the embodiment.
FIG. 10 is a diagram showing an example of selection of adsorption portions according to the embodiment.
FIG. 11 is a diagram showing an example of selection of adsorption portions according to the embodiment.
FIG. 12 is a diagram showing an example of the configuration of a control device according to the embodiment.
FIG. 13 is a flowchart showing a procedure of processing performed by a detaching apparatus according to the embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <System Configuration>

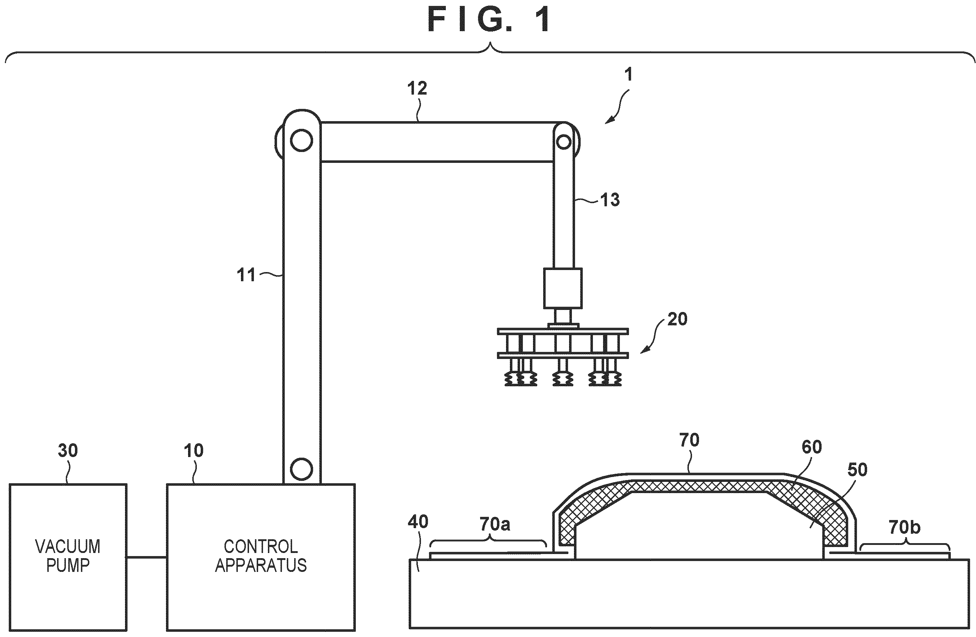

FIG. 1 is a diagram illustrating an example of the configuration of a detaching apparatus according to an embodiment. A jig 50 is placed on a mounting table 40, a workpiece 60 is placed on the jig 50, a film 70 is affixed to the workpiece 60 by a vacuum affixing device (not shown), and then a detaching apparatus 1 adsorbs and detaches unnecessary films 70a and 70b. In the present embodiment, the target object to be adsorbed and detached is a scrap material of the film 70 affixed to the workpiece 60, but the target object may be any of various types of scrap materials. In other words, the present embodiment can be applied to a scrap collection device that adsorbs and collects various scrap materials.

The detaching apparatus 1 includes a control device 10, a plurality of arm portions 11 to 13, and an adsorption device 20. The detaching apparatus 1 may also include a vacuum pump 30. The control device 10 controls rotation operations of the arm portions 11 to 13, operations of the adsorption device 20, and operations of the vacuum pump 30. By controlling the control device 10, the adsorption device 20 can be controlled to any position and orientation in three dimensions. The control device 10 controls the vacuum pump 30, thereby enabling the adsorption device 20 to perform vacuum adsorption.

### <Configuration of Adsorption Device>

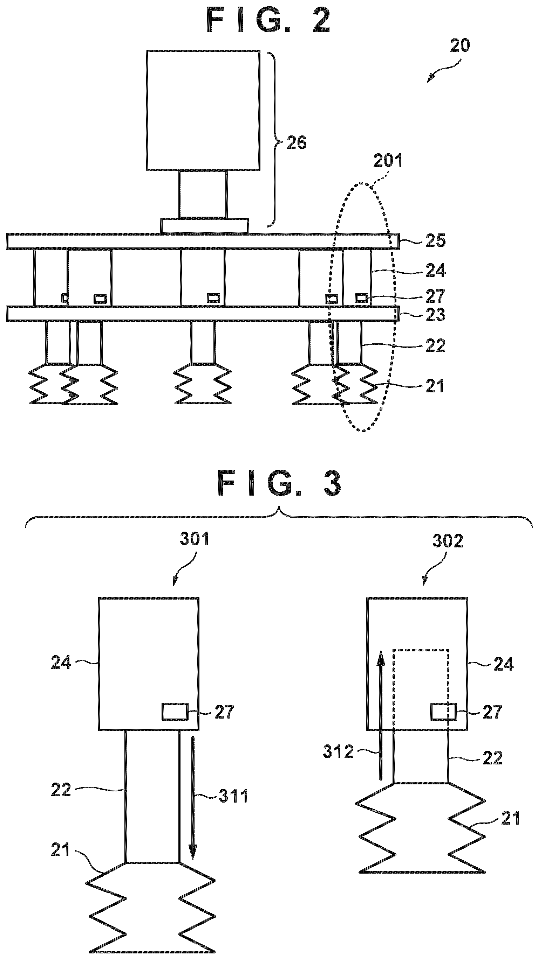

Next, an example of the configuration the adsorption device according to the present embodiment will be described with reference to FIGS. 2 to 5. FIG. 2 is a side view of the adsorption device according to the present embodiment. As shown in FIG. 2, the adsorption device 20 includes adsorption pads 21, rod-shaped members 22, support members 23, actuators 24, support members 25, and a rotation portion 26. Each of the actuators 24 includes a pressure sensor 27. The adsorption device 20 includes a plurality of adsorption portions 201 capable of adsorbing a target object, and each of the adsorption portions 201 includes an adsorption pad 21, a rod-shaped member 22, and an actuator 24. Note that in the case where the actuator 24 is not provided, the adsorption portion 201 may include an adsorption pad 21 and a rod-shaped member 22.

The adsorption pad 21 is disposed at the end of the rod-shaped member 22, and is made of a flexible member having a bellows structure with an internal space. Air suctioned through the open end of the adsorption pad 21 is guided into the rod-shaped member 22, thereby making adsorption possible at the open end. Due to having a bellows structure, the adsorption pad 21 can extend and retract in the adsorption direction. More specifically, the adsorption pad 21 retracts when a force is applied to the adsorption pad 21 in the adsorption direction, and extends when the force is released. The adsorption pad 21 is supported by an end portion of the rod-shaped member 22. The actuator 24 is supported between the support members 23 and the support members 25.

Under the control of the control device 10, the actuator 24 can drive the rod-shaped member 22 to change the position of the rod-shaped member 22 in the adsorption direction. The actuator 24 may be, for example, an air cylinder. Here, FIG. 3 is a diagram showing change in the adsorption portion of the adsorption device according to the present embodiment. Reference numeral 301 denotes the adsorption portion during extension, and 302 denotes the adsorption portion during retraction. The actuator 24 can drive the rod-shaped member 22 in a direction 311 to change the rod-shaped member 22 to an extended position in the adsorption direction. The actuator 24 can also drive the rod-shaped member 22 in a direction 312 to change the rod-shaped member 22 to a retracted position in the adsorption direction. At the retracted position, a portion of the rod-shaped member 22 is accommodated inside the actuator 24.

The pressure sensor 27 provided in the actuator 24 detects the pressure when a target object comes into contact with and is pressed against the adsorption pad 21. The control device 10 acquires the detection result of the pressure sensor 27 and controls the actuator 24 based on the detection result to change the position of the rod-shaped member 22. For example, when a pressure greater than or equal to a threshold value is detected by the pressure sensor 27, the position of the rod-shaped member 22 is changed such that the adsorption pad 21 corresponding to the pressure sensor 27 moves in a direction away from the target object. Note that a vision sensor or a color sensor may be used instead of the pressure sensor 27. As long as it is possible to detect that the target object has come into contact with the adsorption pad 21, other types of sensors may be used.

In this way, each adsorption pad 21 can extend and retract along the adsorption direction, thus making it possible to perform the adsorption operation even when the target object has a three-dimensional shape. Alternatively, regardless of the detection result of the pressure sensor 27, the adsorption pads 21 of the adsorption portions not in use may be retracted by being moved away from the target object. In other words, in the case of selecting the adsorption portions that are to perform the adsorption operation according to the shape of the film 70, the adsorption pads 21 of the unselected adsorption portions may be set to a retracted state by being moved in a direction away from the target object.

The rotation portion 26 is rotatable, under the control of the control device 10, about a rotation axis extending in the adsorption direction. This rotation makes it possible to rotate the adsorption portions within a plane perpendicular to the adsorption direction.

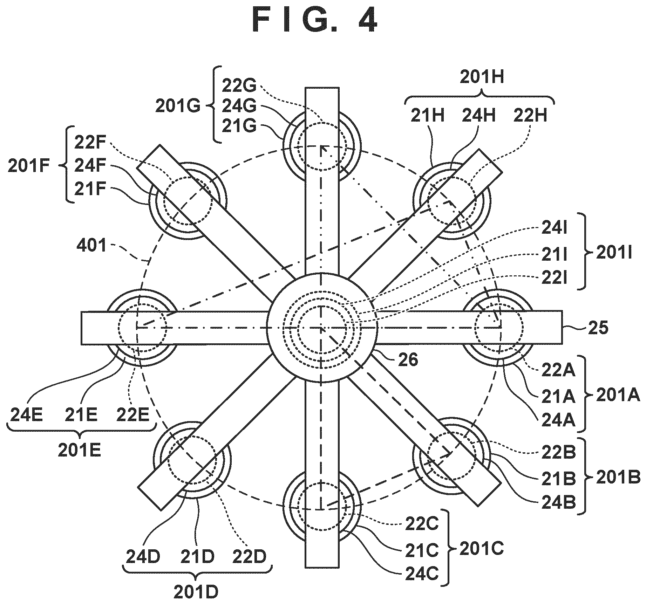

Next, FIG. 4 is a plan view of the adsorption device according to the present embodiment. In FIG. 4, eight adsorption portions 201A to 201H are arranged on the circumference of a circle 401, and one adsorption portion 201I is arranged at the center position of the circle 401. In FIG. 4, the eight adsorption portions 201A to 201H are arranged at predetermined intervals (equidistant intervals) along the circumference. The support members 23 and the support members 25 have a similar structure. In FIG. 4, only the support members 25 are shown, and the support members 23 are hidden by the support members 25. The support members 23 and the support members 25 are rod-shaped members extending from the center of circle 401 in the direction in which the adsorption portions 201A to 201H are located. Note that in FIG. 4, the eight adsorption portions 201A to 201H are arranged on the circumference of the circle 401, but the number of adsorption portions is not limited to eight. Also, a configuration is possible in which an adsorption portion is not located at the center position of the circle 401.

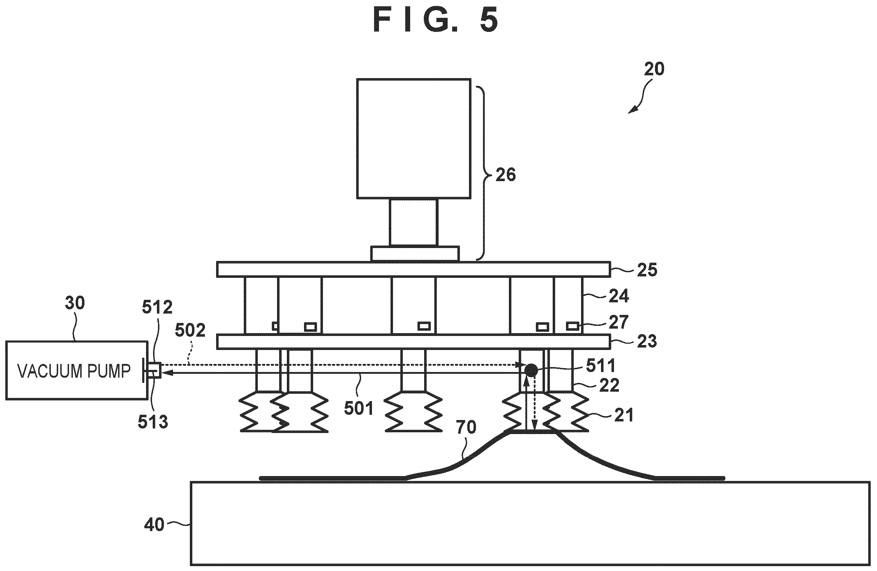

Next, FIG. 5 is an illustrative diagram of vacuum adsorption of the adsorption device according to the present embodiment. The adsorption pads 21 are connected to the vacuum pump 30 via respective flow paths. In FIG. 5, air is suctioned in from the open ends of the adsorption pads 21 and guided into the inside of the rod-shaped members 22. An opening 511 is provided in the side of each of the rod-shaped members 22, and suctioned air flows from the opening 511, through a flexible tubular member (not shown), which is fluidly connected to the opening 511, to a connection portion 512 of the vacuum pump 30. In other words, during adsorption, air flows inside the tubular member in a direction 501. Conversely, when suctioned is stopped, or when air is pumped from the vacuum pump 30 to the adsorption pad 21, air flows inside the tubular member along a direction 502. The tubular member may be connected to the vacuum pump 30 via a path extending toward the rotation portion 26 of the adsorption device 20 and further extending along the arm portions 11 to 13 toward the control device 10. A tubular member may be provided for each adsorption portion, or several adsorption portions may use a common portion of one flow path. Note that in the present embodiment, an example in which the vacuum pump 30 is used will be described, but an ejector may be used as a vacuum generating source instead of the vacuum pump 30.

As one example, nine tubular members are respectively provided for the adsorption portions 201A to 201I, and are individually connected to the vacuum pump 30 via nine connection portions 512. A valve 513 is provided for each of the connection portions 512, and the control device 10 controls the opening and closing of the valves 513 to make it possible to select the adsorption portions that are to perform the adsorption operation. For example, consider a case where three adsorption portions 201A, 201G, and 2011 are selected from the nine adsorption portions 201A to 201I as adsorption portions that are to perform the adsorption operation. In this case, the control device 10 can perform the selection by controlling the valves 513 corresponding to the adsorption portions 201A, 201G, and 201I to be open and the other valves 513 to be closed. In this manner, by blocking one or more of the flow paths connected to the adsorption pads 21 of adsorption portions 201, it is possible to select and operate an unblocked adsorption portion 201.

In addition, in FIG. 5, an example in which the valves 513 provided on the vacuum pump 30 side are opened and closed has been described, but the present invention is not limited to this example. Valves may be provided in the vicinity of the openings 511. In this case, a drive mechanism separate from the actuator 24 may be provided for each of the adsorption portions 201, and the control device 10 may control the opening and closing of the valves by controlling the drive mechanisms. Alternatively, a separate drive mechanism may not be provided, and valves provided in the vicinity of the openings 511 may be manually opened and closed.

### <Example of Adsorption Operation and Rotation Operation>

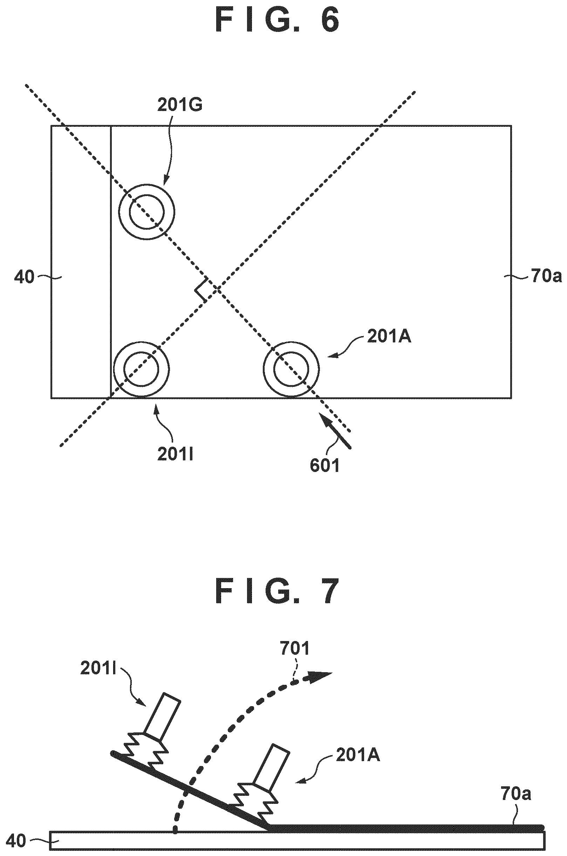

Next, the adsorption operation and the rotation operation according to the present embodiment will be described with reference to FIGS. 6 and 7. FIG. 6 is an illustrative diagram of performing the adsorption operation using selected adsorption portions according to the present embodiment. In FIG. 6, three adsorption portions 201A, 201G, and 201I have been selected. Note that although the depiction of the other adsorption portions 201 is omitted, in reality, as shown in FIG. 4, the nine adsorption portions 201A to 2011 are present.

An unnecessary film 70a has a rectangular shape, and corner portions of the rectangular shape need to be adsorbed. Therefore, the adsorption portion 201I at the center position of the circle and the adsorption portions 201A and 201G located at angles of 90 degrees in a view from the center of the circle are selected. These adsorption portions 210 are operated to adsorb the corner portions of the film 701a. The adsorption portion 201I corresponds to the point of action when the rotation operation is performed, and the adsorption portions 201A and 201G correspond to fulcrums when the rotation operation is performed.

FIG. 7 is an illustrative diagram of the rotation operation according to the present embodiment, and is a side view seen from a direction 601 in FIG. 6. The adsorption device 20 is rotated in a direction 701 while the adsorption portions 201A and 201G, which serve as the fulcrums, are in a contact state (that is, in contact with the film 70a). As a result, the adsorption portion 201I, which is the point of action, moves in the direction 701 while adsorbing the film 70a, and thus the rotation operation is performed. As a result, the film 70a is detached.

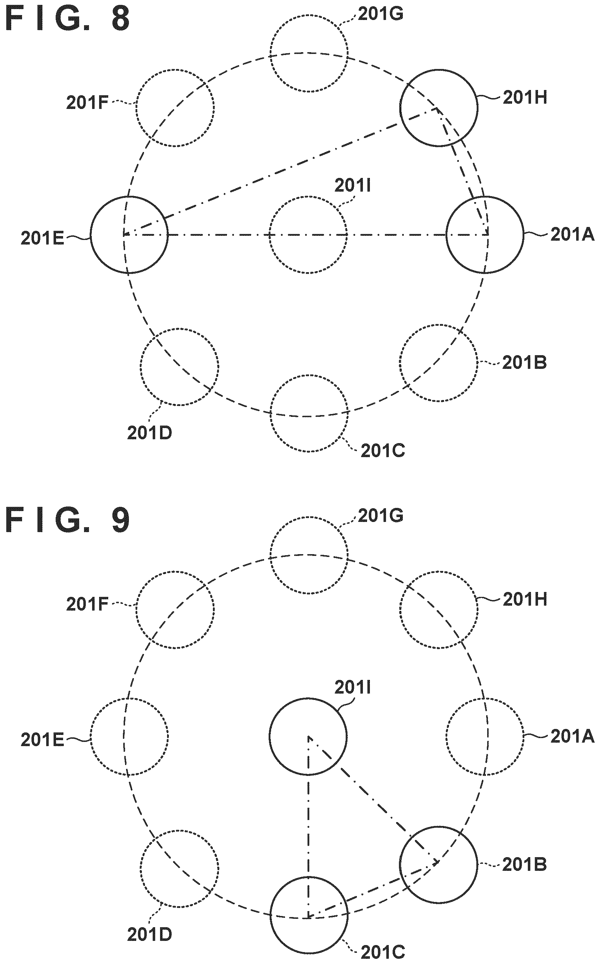

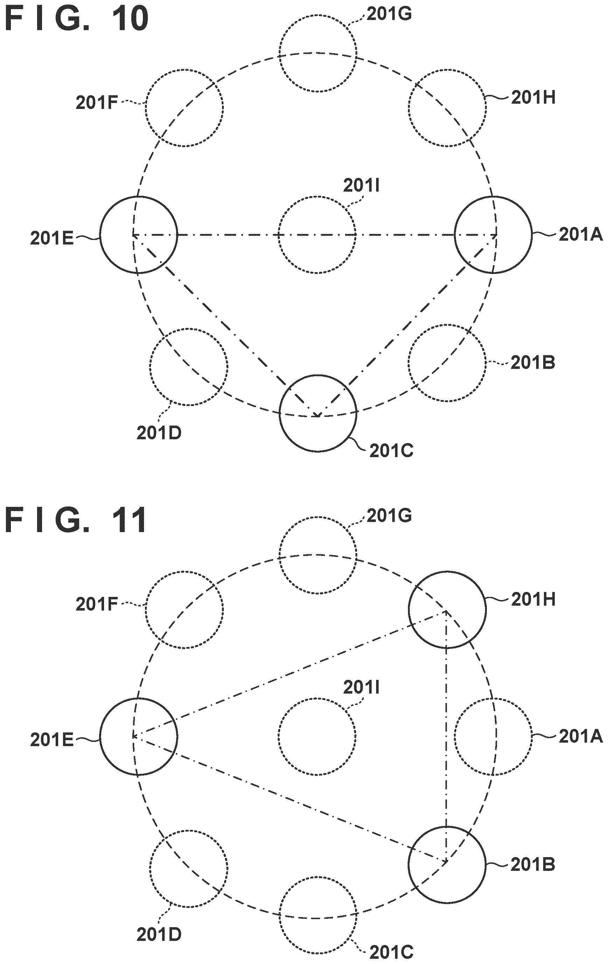

Note that the selected adsorption portions 201 are not limited to the three adsorption portions shown in FIG. 6. For example, in the case where the shape of the film 70a has an acute angle, the adsorption portions 201A, 201E, and 201H may be selected according to the shape of the film 70a, as shown in FIG. 8. Furthermore, in the case where the area of the film 70a is small and the shape has an acute angle, the adsorption portions 201I, 201B, and 201C may be selected according to the shape of the film 70a, as shown in FIG. 8. Furthermore, in the case where the area of the film 70a is large and has a 90-degree corner as shown in FIG. 6, the adsorption portions 201A, 201C, and 201E may be selected as shown in FIG. 10. The selection of the adsorption portions is not limited to these examples, and appropriate adsorption portions may be selected according to the shape of the film 70a, such as selecting the adsorption portions 201B, 201E, and 201H as shown in FIG. 11.

Furthermore, the number of adsorption portions to be selected is not limited to three, and a larger number of adsorption portions may be selected as long as the rotation operation of the adsorption device 20 is not hindered. For example, an adsorption portion on a straight line connecting the positions of adsorption portions serving as two fulcrums may be further selected. Specifically, the adsorption portion 201E may be selected as the point of action, and the adsorption portions 201C, 201I, and 201G located on a straight line may be selected as the fulcrum. This allows the film 70a to be more strongly adsorbed without interfering with the rotation operation of the adsorption device 20. Furthermore, the number of adsorption portions to be selected is not limited to three or more, and two adsorption portions may be selected. A configuration is possible in which one adsorption portion serves as the fulcrum, another serves as the point of action, and the film 70a is detached by rotating the adsorption device around the fulcrum.

### <Configuration of Control Device>

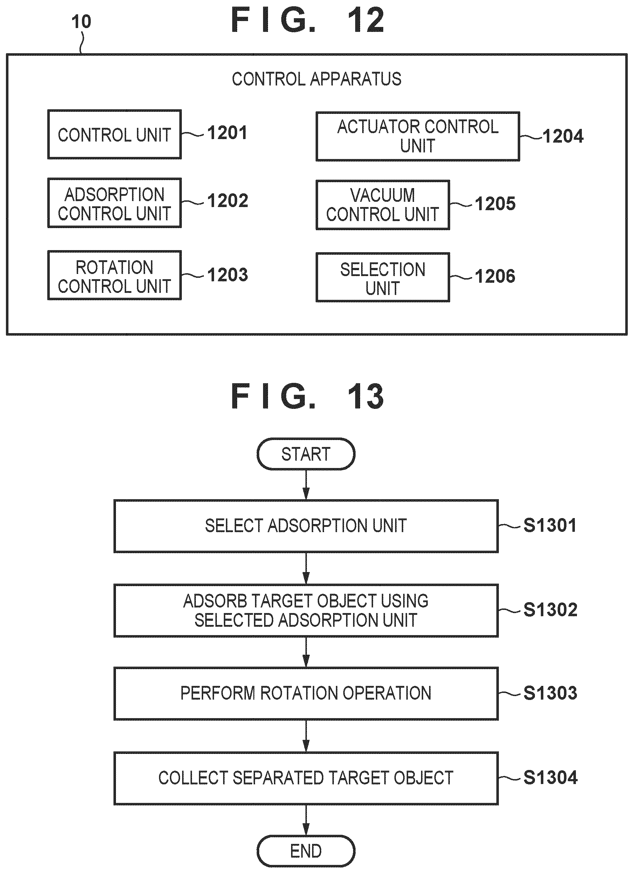

Next, an example of the configuration of the control device 10 according to the present embodiment will be described with reference to FIG. 12. The control device 10 includes a control unit 1201, an adsorption control unit 1202, a rotation control unit 1203, an actuator control unit 1204, a vacuum control unit 1205, and a selection unit 1206.

The control unit 1201 controls various operations of the control device 10. The control unit 1201 is one or more central processing units (CPUs), and can control various operations of the control device 10 by reading and executing computer programs from one or more memories. The adsorption control unit 1202 controls the arm portions 11 to 13 to move the adsorption device 20, and, under the control of the vacuum control unit 1205, controls the selected adsorption portions 201 to perform the adsorption operation. The rotation control unit 1203 executes a rotation operation to rotate the target object (for example, the film 70) on which the adsorption operation has been executed. This rotation operation causes the target object to be detached.

The actuator control unit 1204 controls the actuators 24 based on the detection result of the pressure sensors 27 to change the position of the rod-shaped members 22. The actuator control unit 1204 can change the position of the rod-shaped member 22 for each adsorption portion 201 individually. When a pressure sensor 27 detects a pressure greater than or equal to a threshold value, the actuator control unit 1204 changes the position of the corresponding rod-shaped member 22 such that the adsorption pad 21 corresponding to that pressure sensor 27 moves in a direction away from the target object.

The vacuum control unit 1205 controls the vacuum pump 30. The vacuum control unit 1205 controls the vacuum pump 30 so as to adsorb the air inside the adsorption pads 21 that have come into contact with the target object. This causes the adsorption pads 21 to adsorb the target object. In addition, when moving the adsorbed target object and placing it in a collection box for the target object, the vacuum control unit 1205 cancels adsorption by stopping the suctioning by the vacuum pump 30 or by feeding air from the vacuum pump 30 to the adsorption pads 21. Furthermore, in the case where an ejector is used instead of the vacuum pump 30, the vacuum control unit 1205 controls the ejector to suction air inside the adsorption pads 21 or stop the suction.

The selection unit 1206 selects, from among the plurality of adsorption portions 201, a plurality of adsorption portions that are performing the adsorption operation on the target object. The selection unit 1206 selects a plurality of adsorption portions that are to perform the adsorption operation on the target object by blocking one or more of the flow paths connected to the adsorption pads 21. By controlling the opening and closing of the valves 513 shown in FIG. 5, one or more of the flow paths connected to the adsorption pads 21 can be blocked.

### <Processing>

A procedure of processing performed by the detaching apparatus according to the present embodiment will be described below with reference to the flowchart of FIG. 13. In step S1301, the selection unit 1206 selects a plurality of adsorption portions that are to perform the adsorption operation for adsorbing the film 70, from among the plurality of adsorption portions 201A to 201I. Here, it is assumed that the three adsorption portions 201A, 201I, and 201G are selected as shown in FIG. 6. The three adsorption portions selected here may be three adsorption portions designated based on user input given to the control device 10, or they may be three adsorption portions automatically selected according to the shape of the target object based on an image of the target object (film 70) captured using a camera not shown.

In step S1302, the adsorption control unit 1202 controls the arm portions 11 to 13 to move the adsorption device 20 and bring it into contact with the target object (film 70). Then, under control of the vacuum pump 30 by the vacuum control unit 1205, the adsorption control unit 1202 controls the three selected adsorption portions 201A, 201I, and 201G to perform the adsorption operation for adsorbing the target object (film 70).

In step S1303, the rotation control unit 1203 executes the rotation operation for rotating the target object (film 70) on which the adsorption operation has been executed. For example, the adsorption device 20 is rotated as shown in FIG. 7, based on the adsorption portions 201A and 201G serving as fulcrums. As a result, while the adsorption portion 201I, which is the point of action, is adsorbing the target object (film 70), the adsorption portion 201I moves in a direction away from the object (mounting table 40) to which the target object is affixed. The rotation operation can thus be executed.

In step S1304, the adsorption control unit 1202 controls the arm portions 11 to 13 to move the adsorption device 20, and transports the detached target object (film 70) to a target object collection box. After the transfer, the vacuum pump 30 is controlled to stop the suctioning, and the detached target object (film 70) is placed into the collection box. By repeating the above operations, the desired target object can be adsorbed and detached. The processing in FIG. 13 thus ends.

As described above, in the present embodiment, adsorption portions that are to be used are selected from among a plurality of adsorption portions included in the adsorption device, and the rotation operation is executed using the selected adsorption portions. Accordingly, adsorption portions at positions suitable for detachment can be selected according to the shape of the target object and used to perform the rotation operation, thereby making it possible to provide an adaptive detaching apparatus that can detach a target object regardless of the shape of the target object.

According to the present invention, it is possible to provide an adaptive detaching apparatus that can detach a target object regardless of the shape of the target object.

The invention is not limited to the foregoing embodiments, and various variations/changes are possible within the spirit of the invention.

## Claims

1. A detaching apparatus (1) that detaches a target object (70), the detaching apparatus comprising:
a plurality of adsorption portions (201A-201I) configured to adsorb the target object;
selection means (1206) for selecting a plurality of adsorption portions that are to execute an adsorption operation on the target object, from among the plurality of adsorption portions;
adsorption control means (1202) for causing the plurality of adsorption portions selected by the selection means to execute the adsorption operation; and
rotation control means (1203) for executing a rotation operation of the adsorption portions which the adsorption operation was executed.

2. The detaching apparatus according to claim 1,
wherein the plurality of adsorption portions are arranged on a circumference of a circle.

3. The detaching apparatus according to claim 2,
wherein the plurality of adsorption portions are arranged at predetermined intervals on the circumference of the circle.

4. The detaching apparatus according to any one of claims 1 to 3,
wherein the plurality of adsorption portions are arranged at a plurality of positions on a circumference of a circle and at a center position of the circle.

5. The detaching apparatus according to any one of claims 1 to 4,
wherein the selection means selects a first adsorption portion, a second adsorption portion, and a third adsorption portion from among the plurality of adsorption portions,
the first adsorption portion corresponds to a point of action when performing the rotation operation, and
the second adsorption portion and the third adsorption portion correspond to fulcrums when performing the rotation operation.

6. The detaching apparatus according to any one of claims 1 to 5,
wherein each of the adsorption portions includes
a rod-shaped member (22),
an adsorption pad (21) arranged at an end portion of the rod-shaped member, and
an actuator (24) for change a position of the rod-shaped member in an adsorption direction by driving the rod-shaped member.

7. The detaching apparatus according to claim 6, further comprising:
actuator control means (1204) for controlling the actuators,
wherein each of the adsorption portions further includes a sensor (27), and
the actuator control means changes positions of the rod-shaped members by controlling the actuators based on detection results of the sensors.

8. The detaching apparatus according to claim 7,
wherein in a case where a pressure greater than or equal to a threshold value was detected by a first sensor among the plurality of sensors, the actuator control means changes a position of the rod-shaped member corresponding to the first sensor in such a manner that the adsorption pad corresponding to the first sensor moves in a direction away from the target object.

9. The detaching apparatus according to any one of claims 6 to 8,
wherein the actuators are air cylinders.

10. The detaching apparatus according to any one of claims 1 to 9, further comprising:
vacuum control means (1205) for controlling a vacuum pump or an ejector,
wherein each of the adsorption portions includes an adsorption pad (21),
each of the adsorption pads is connected to the vacuum pump or the ejector via a corresponding flow path, and
for each adsorption pad in contact with the target object, the vacuum control means causes the adsorption pad to adsorb the target object by controlling the vacuum pump or the ejector to suction air inside the adsorption pad.

11. The detaching apparatus according to any one of claims 1 to 10,
wherein the selection means selects the plurality of adsorption portions that are to execute the adsorption operation on the target object, by blocking one or more flow paths connected to the adsorption pads.

12. The detaching apparatus according to any one of claims 1 to 11,
wherein the target object is a scrap material of a film (70) affixed to a workpiece (12).

13. A control method for a detaching apparatus (1) that detaches a target object (70), the detaching apparatus including a plurality of adsorption portions (201A-201I) configured to adsorb the target object, the control method comprising:
selecting (S1301) a plurality of adsorption portions that are to execute an adsorption operation on the target object, from among the plurality of adsorption portions;
causing (S1302) the selected adsorption portions to execute the adsorption operation; and
executing (S1303) a rotation operation of the adsorption portions which the adsorption operation was executed.

14. A program for causing a computer to execute a control method for a detaching apparatus (1) that detaches a target object (70), the detaching apparatus including a plurality of adsorption portions (201A-201I) configured to adsorb the target object, the program causing the computer to:
select a plurality of adsorption portions that are to execute an adsorption operation on the target object, from among the plurality of adsorption portions;
cause the selected adsorption portions to execute the adsorption operation; and
execute a rotation operation of the adsorption portions which the adsorption operation was executed.
